(19) Europäisches Patentamt
European Patent Office
Office européen des brevets

(11) **EP 1 853 674 B1**

(12) **EUROPEAN PATENT SPECIFICATION**

(45) Date of publication and mention
of the grant of the patent:
**16.05.2012 Bulletin 2012/20**

(21) Application number: **06744420.8**

(22) Date of filing: **08.02.2006**

(51) Int Cl.:
*C09D 123/28* (2006.01)     *B05D 5/12* (2006.01)
*B05D 7/24* (2006.01)     *C09D 5/00* (2006.01)
*C09D 5/24* (2006.01)     *C09D 7/12* (2006.01)

(86) International application number:
**PCT/IB2006/000240**

(87) International publication number:
**WO 2006/092680 (08.09.2006 Gazette 2006/36)**

(54) **WHITE COLORED ELECTRICALLY CONDUCTIVE PRIMER PAINT COMPOSITIONS, A METHOD OF PAINTING IN WHICH THEY ARE USED AND THE PAINTED OBJECTS WHICH HAVE BEEN PAINTED WITH SAID METHOD OF PAINTING**

WEISSE ELEKTRISCH LEITFÄHIGE GRUNDIERUNGSFARBZUSAMMENSETZUNGEN, ANSTREICHVERFAHREN DAMIT UND MIT DIESEM ANSTREICHVERFAHREN GESTRICHENE OBJEKTE

COMPOSITIONS DE PEINTURE PRIMAIRE DE COULEUR BLANCHE CONDUISANT L'ELECTRICITE, PROCEDE DE PEINTURE LES UTILISANT ET OBJETS PEINTS AU MOYEN DUDIT PROCEDE

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.02.2005 JP 2005045714**

(43) Date of publication of application:
**14.11.2007 Bulletin 2007/46**

(73) Proprietor: **BASF Coatings Japan Ltd.**
**Yokohama 244-0815 (JP)**

(72) Inventors:
• **SHINOZAKI, Yuichi**
**Yokohama 244-0815 (JP)**

• **TOKIEDA, Masato**
**244-0003 Yokohama (JP)**
• **KAWAHARA, Kazunori**
**244-0002 Yokohama (JP)**

(74) Representative: **Leifert & Steffan**
**Patentanwälte**
**Burgplatz 21-22**
**40213 Düsseldorf (DE)**

(56) References cited:
WO-A1-2004/078861     WO-A1-2005/012449
JP-A- 2 194 071     JP-A- 62 131 064
JP-A- 2004 075 735     JP-A- 2004 262 988
JP-A- 2005 171 024     US-A- 5 804 615

## Description

[Technical Field]

The present invention concerns white colored electrically conductive primer paint compositions which have excellent electrically conductivity and excellent water resistance which are painted onto polyolefin base materials.
Moreover, the present invention concerns a method of painting in which said white colored Electrically conductive primer paint compositions are used and the objects which have been pained with said method of painting.

[Background Technology]

Electrically conductive primers in which a pigment which has electrical conductivity, as typified by electrically conductive carbon black, has been compounded are widely used as a means of achieving electrostatic painting of topcoat paints on polyolefin base materials. In recent years, with the increasing importance of design and color tone, white colored electrically conductive primers as typified by electrically conductive carbon have been used especially for light colored metallic paints. Fillers where an electrically conductive metal oxide such as tin oxide, for example, has been coated on the surface of whiskers, and fillers where tin oxide or nickel has been coated on the surface of flake-like mica (for example; see Patent Citation 1), and fillers where a base material has been coated with tin oxide, antimony doped tin oxide (ATO) or tin doped indium oxide (ITO) (for example, see Patent Citation 2) are known as electrically conductive fillers with which there is no great reduction in the degree of whiteness. However, with the paint compositions in which these needle-shaped and fibrous white colored electrically conductive fillers which have good electrical conductivity are used, it is difficult to obtain a paint film which has good water resistance and there is a problem in that limits are imposed upon the conjoint use of non-electrically conductive pigments which have good water resistance and the resins which can be compounded in the paints.
Furthermore, crosslinking electrically conductive primer compositions for electrostatic painting purposes which contain water-soluble electrically conductive polymers which have sulfonic acid groups and/or carboxyl groups, solvents and silane coupling agents are known as a means of imparting water resistance to electrically conductive polymers (for example, Patent Citation 3). However, there is no suggestion of the water resisting effect of electrically conductive fillers and especially of white colored electrically conductive fillers and, furthermore, there is no waver-resisting effect even when coupling agents such as silane coupling agents, titanium coupling agents, aluminum coupling agents or zircoaluminum coupling agents and the like, and silicone oils, for example, are blended in paints which contain white colored electrically conductive fillers.
[Patent Citation 1]
Unexamined Patent Application Laid Open 2004-262988
[Patent Citation 2]
Unexamined Patent Application Laid Open 2004-217872
[Patent Citation 3]
Unexamined Patent Application Laid Open 2003-039010

[Disclosure of the Invention]

WO 2005/012449 A1 discloses white electrically conducting primer compositions comprising a chlorinated olefin and a white conductive titanium dioxide powder. Organic matter can be adhered to the surface of the conductive titanium dioxide powder usually in an amount of about 0.0001 to about 0.4 $g/m^2$ of surface area of white conductive titanium dioxide powder to improve the dispersibility in resins and stability of conductivity over time. Furhermore, JP A 2005 17 1024, US 58 04616 A, JP A 2194071 and JP A 62131064 describe other compositions comprising conductive fillers.

[Problems to be Resolved by the Invention]

The present invention provides white colored electrically conductive primer paint compositions which in addition to having good electrical conductivity on a polyolefin base material have excellent adhesion properties and water resistance, a method of painting in which these compositions are used, and the painted objects which have been obtained with said method of painting.

[Means of Resolving These Problems]

That is to say, the invention provides a white colored electrically conductive primer paint composition comprising (A) resin which includes chlorinated polyolefin resin, (B) white colored electrically conductive filler which has been treated with a coupling agent and of which the coupling agent surface coverage is from 10 to 90% and (C) solvent in which there are from 10 to 150 parts by mass of white colored electrically conductive filler (B) per 100 parts by mass as solid fraction of the resin (A).

Furthermore, the invention provides a white colored electrically conductive primer paint composition in which the abovementioned white colored electrically conductive filler which has been treated with a coupling agent is either fibrous gallium titanate or titanium oxide which has been coated with tin oxide and/or antimony and which has been treated with at least one type of coupling agent selected from among the silane coupling agents, titanium coupling agents, aluminum coupling agents and zircoaluminum coupling agents.

Furthermore, the invention provides a white colored electrically conductive primer paint composition in which the chlorine content of the abovementioned chlorinated polyolefin is from 5 to 50 mass% and the weight average molecular weight of the abovementioned chlorinated polyolefin is from 10,000 to 100,000.

Moreover, the invention provides a method of applying the abovementioned white colored electrically conductive primer paint compositions and the objects which have been painted by means of this method of painting.

[Effect of the Invention]

It is possible by using a white colored electrically conductive primer paint composition which contains a white colored electrically conductive filler which has been surface treated with a coupling agent of this invention-to-obtain on a polyolefin base material a paint film which in addition to having good electrical conductivity has excellent adhesion properties and water resistance.

[Embodiment of the Invention]

The invention is described in detail below.

Chlorinated polyethylene resins, chlorinated polypropylene resins, chlorinated ethylene-propylene copolymers, chlorinated ethylene-vinyl acetate copolymers can be cited as examples of the chlorinated polyolefin resin in the resin (A) which includes chlorinated polyolefin resin which is used in a white colored electrically conductive primer paint composition of this invention.

The chlorine content of the chlorinated polyolefin resin is preferably from 5 to 50 mass%, more desirably from 15 to 35 mass% and most desirably from 18 to 25 mass%. In those cases where the chlorine content of the chlorinated polyolefin resin is less than 5 mass% the dissolving power in solvents is reduced and in those cases where it exceeds 50 mass% there is a risk that the solvent resistance and weather resistance of the paint film will become poor.

The weight-average molecular weight of the chlorinated polyolefin resin is preferably from 10,000 to 100,000. It is more desirably from 30,000 to 80,000 and most desirably from 50,000 to 70,000. In those cases where the weight-average molecular weight is less than 10,000 the adhesion properties on the base material are poor and in those cases where it exceeds 100,000 the paint viscosity become high and this impedes the painting operation.

Furthermore, the chlorinated polyolefin resin which is used in the invention may be co-polymerized and modified with an acid anhydride such as maleic anhydride for example.

In addition to the chlorinated polyolefin resin, other resins such as, for example, unchlorinated polyolefin resins, melamine resins, blocked isocyanate resins, epoxy resins can be used conjointly in the resin (A) which includes chlorinated polyolefin resin which is used in a white colored electrically conductive primer of this invention.

The resin solid fraction ratio of the chlorinated polyolefin resin and the other resins is preferably from 100/0 to 50/50 (parts by mass). In those cases where the solid fraction proportion of other resins exceeds 50 parts by mass the adhesion properties with the base material are poor. The preferred range for the solid fraction ratio of chlorinated polyolefin resin and other resins is from 90/10 to 55/45, and the most desirable range for this ratio is from 80/20 to 60/40.

The white colored electrically conductive filler (B) which has been surface treated with a coupling agent in a white colored electrically conductive primer paint composition of this invention is a filler which has been surface treated with a coupling agent. The coupling agent used for the surface treatment is of at least one type selected from among the silane coupling agents, titanium coupling agents, aluminum coupling agents and zircoaluminum coupling agents, and by carrying out surface treatment with these coupling agents it is possible to improve the water resistance of the filler itself while maintaining the electrical conductivity of the white colored electrically conductive filler. In the white colored electrically conductive primer layer the electrically conductive filler particles are in contact with one another and this imparts electrical conductivity to the whole of the paint film surface.

Examples of silane coupling agents which can be used in the invention include γ-glycidoxypropyltrimethoxysilane, vinyltriacetoxysilane, methyltrimethoxysilane, vinyltris(methoxyethoxy)silane, y-chloropropyltrimethoxysilane, (3,3,3-trifluoropropyl)methyldi-methoxysilane, methyltriethoxysilane, vinyltriacetoxysilane and vinyltrimethoxysilane.

Examples of the titanium coupling agents which can be used in the invention include tetra(2,2-diallyloxymethyl-1-butyl)bis(ditridecyl)phosphitotitanate, tetraoctylbis(ditridecylphosphito)titanate, isopropyltriisostearoyltitanate, isopropyltridecylbenzenesulfonyltitanate, isopropyltrioctanoyltitanate and dicumylphenyloxyacetatotitanate.

Examples of the aluminum coupling agents which can be used in the invention include acetoalkoxyaluminum diisopropylate-.

Examples of the zircoaluminum coupling agents which can be used in this invention include Kyabukomoddo M, Kyabukomoddo MPG and Kyabukomoddo MPM produced by the Kyabudon Chemical Co.

Either fibrous gallium titanate or titanium oxide which has been coated with tin oxide and/or antimony is preferred for the white colored electrically conductive filler.

If in those cases where the white colored electrically conductive filler is surface treated with a coupling agent the whole surface of the filler is covered with the coupling agent then electrical conductivity cannot be realized, and if the extent of the treatment is very small then there is no improvement in the water resistance.

The coupling agent is added in such a way that the surface coverage as a theoretical value is from 10 to 90%, and preferably in such a way that the coverage is from 30 to 85% and most desirably from 50 to 80%.

The amount of coupling agent required in the treatment can be calculated from the intended surface coverage using the following equation.

$$\text{Amount of Coupling Agent (g)} = \{\text{Filler (g)} \times \text{Specific}$$

$$\text{Surface Area of the Filler (m}^2/\text{g)/Minimum Coating Area}$$
$$\text{of Coupling Agent (g/m}^2)\} \times \text{Surface Coverage}$$

The known methods such as that disclosed in Japanese Unexamined Patent Application Laid Open H5-303238, for example, can be used for the method of surface treatment with a coupling agent of a white colored electrically conductive filler which is to be used in the invention. For example, methods in which the electrically conductive filler is dispersed in a solution in which the coupling agent has been dissolved and, after mixing with stirring for a prescribed period of time at the prescribed temperature, the filler is separated off by a means such as filtration and dried (solution soaking methods) and methods in which a solution in which the coupling agent has been dissolved is sprayed onto the electrically conductive filler and dried (spray drying methods) can be adopted.

No limitation is imposed upon the solvent which is used for the surface treatment in the solution soaking method provided that it is inert in respect of the coupling agent, and examples include cyclohexane, methyl alcohol, ethyl alcohol, toluene, isopropyl alcohol, acetone, benzene. Furthermore, the surface treatment temperature differs depending on the solvent and coupling agent which are being used, but it is preferably from 10 to 80˚C. If it is higher than 80˚C then the solvent -inevitably evaporates and the surface treatment cannot be carried out and if it is lower than 10˚C then the surface treatment is not carried out satisfactorily.

Furthermore, the surface treatment time is preferably from 0.01 to 12 hours, and more desirably from 0.5 to 5 hours. If it is shorter than 0.01 hour then the surface treatment is not carried out satisfactorily. Furthermore, if it is longer than 12 hours then the solvent inevitably evaporates and the surface treatment is not carried out.

Solvents of the same type as those used in the solution soaking methods can be used in the spray drying methods and, except for the fact that solutions which have a lower concentration of about half the concentration which is used in the solvent soaking methods can be used, the same conditions as with the solution soaking methods can be used within the range of the amount of coupling agent which is being used.

The solvent (C) which can be used in a white colored electrically conductive primer paint composition of this invention is an organic solvent, for example an aromatic hydrocarbon solvent such as toluene or xylene, a ketone solvent such as acetone or methyl ethyl ketone, an ester solvent such as ethyl acetate or butyl acetate, and an ether solvent such as butyl cellosolve, or a mixture of two or more such solvents. The amount of solvent should be selected in such a way that the viscosity of the paint is within the range which is suitable for painting.

The white colored electrically conductive primer paint compositions of this invention, on being painted on a polyolefin base material, can have excellent adhesion properties and water resistance in addition to good electrical conductivity.

Examples of the components from which a polyolefin base material which is painted with a primer paint composition of this invention is made include polypropylene resins and polypropylene resin based alloy materials. The polyolefin resin based alloy materials are composite materials in which one or more type of polymer has been physically mixed with a polypropylene resin and they are known as materials where there is a synergistic effect on the overall practical performance.

The distinguishing features of this invention come to the fore in particular in those cases where the polyolefin base material contains plasticizer. Furthermore, one type, or two or more types, of ultraviolet absorber, antioxidant, mold release agent, antistatic agent, coloring agent, fire retarding agent, fiber reinforcing agent such as glass fibers, inorganic fillers can be included in the polyolefin base material.

The polyolefin base material can have any of a variety of forms, being a film, a sheet, a plate or a solid object for example.

No particular limitation is imposed upon the method of applying the electrically conductive primer paint composition in this invention and it can be applied, for example, by means of air-spray painting, airless spray painting, low pressure atomization spray painting (HVLP). Neither is any particular limitation imposed upon the thickness of the paint film, but a hardened paint film thickness of from 5 to 15 $\mu$m is preferred for realizing electrical conductivity in the paint film.

A topcoat paint can be applied on top of the paint film which has been obtained by applying a white colored electrically conductive primer paint composition of this invention. The topcoat paint which is applied may be a solid color paint or it may also be a combination of a metallic base coat paint and a clear paint, but the topcoat paint is preferably light colored.

Polyurethane resin based paints are generally used for the resins which are used for solid color paints purposes, but provided that they can be hardened at temperatures at which the base material is not deformed, other thermoset type resin compositions such as those used in acrylic-melamine resin based paints can be used.

Furthermore, examples of the pigments for solid color paints include titanium oxide, carbon black, chrome yellow, yellow ochre, yellow iron oxide, Hunza yellow, pigment yellow, chrome orange, chrome vermilion, permanent orange, amber, permanent red, brilliant carmine, fast violet, methyl violet lake, ultramarine, Prussian blue, cobalt blue, phthalocyanine blue, pigment green and naphthol green, and various types of additive can be used, as required, in a solid color paint.

As with the solid color paints, polyurethane resin based paints are generally used for the resins which are used for metallic base coat paints and clear paints.

Furthermore, glitter pigments such as aluminum flakes, vapor deposited aluminum and aluminum oxide and the flake-like mica, titanium oxide coated mica and iron oxide coated mica which are known as optical interference pigments can be used as the pigments which are used in the metallic base coat paints, and various types of additive can be used, as required, in the metallic base coat paints.

It is possible by applying a metallic based coat paint and a clear paint successively wet-on-wet to improve further the design potential, finished appearance, weather resistance, chemical resistance, water resistance, moisture resistance of the paint film.

No particular limitation is imposed upon the method whereby these topcoat paints are applied, and they can be applied, for example, by means of air spray painting, airless spray painting, electrostatic paint , but in those cases where a white colored electrically conductive primer paint of this invention has been used the use of electrostatic painting is preferred. No particular limitation is imposed upon the thickness of the topcoat paint film, but in the case of the solid colors it is preferably from 20 to 60 $\mu$m, in the case of the metallic base coats it is preferably from 10 to 30 $\mu$m and in the case of a clear coats it is preferably from 15 to 50 $\mu$m.

With these topcoat paints the paint films can be hardened and dried at normal temperature. However, to harden the paint films satisfactorily heating to a hardening temperature of from 70 to 150°C is preferred. If the hardening temperature is less than 70°C then there is a risk that hardening will not proceed satisfactorily, and if the hardening temperature exceeds 150°C then there is a risk that deformation of the base material or a decline in paint film properties such as yellowing of the paint film and embrittlement of the paint film for example will' occur. The hardening time varies according to the hardening temperature, but a time of from 30 to 60 minutes is appropriate at a hardening temperature of from 70 to 150°C.

[Illustrative Examples]

The invention is described in more detail below by means of illustrative examples, but the invention is not limited by these illustrative examples.

Moreover, the evaluations in the examples and comparative examples were carried out using the methods outlined below.

[Experimental Methods and Evaluations]

Electrical Conductivity

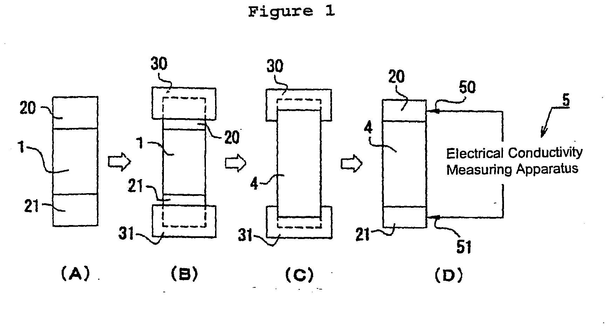

The method used to measure electrical conductivity is described below with reference to Figure 1. (A) Commercial aluminum tape was would around each end of a plastic base material sample of length about 15 cm and the aluminum tapes on both ends were pre-marked in such a way that the distance between the terminals of the measuring apparatus was 10 cm (A). Then (B) masking tape was wound around leaving a border of some 3 to 5 mm from the base material on top of the aluminum tape and then (C) the electrically conductive primer paint was applied with an air spray. Immediately after painting, the masking tape was quickly peeled off and the terminals of a three-range Insulation Resistance Meter, model 3301, produced by the Kyoritsu Denki Keiki Co. were fitted to the pre-determined marks on the two end aluminum tape parts and the resistance value was measured (D). The units used were $\times 10^6$ $\Omega$.

The assessment of the electrical conductivity was carried out on the following basis:

○: Resistance value less than 100 x $10^6$ $\Omega$.
Δ: Resistance- value above 100 x $10^6$ $\Omega$ but less than 2,000 x $10^6$ $\Omega$.
X: Resistance value above 2,000 x $10^6$ $\Omega$.

Adhesion with the Base Material

Eleven longitudinal and transverse cuts were made with a cutter knife in the topcoat painted paint film with a spacing of 2 mm so as to provide 100 squares and the state of peeling with cellophane tape was assessed in the following way.

○: No peeling away of the paint film (as squares, 100/100)
Δ: Some peeling away of the paint film (as squares, from 85 to 99/100)
X: Almost all of the paint film peeled away (as squares, from 0 to 84/100)

Moisture Resistance

A topcoat painted sheet was introduced into a constant temperature, constant humidity chamber at 50˚C, 95% humidity and left to stand for 240 hours. After this time the painted sheet was taken out and inspected in respect of any abnormality in the appearance of the paint film and the extent of peeling of the paint film. A test of the adhesion after the moisture resistance - test was carried out using the same.method as described above 24 hours after the sheet had been taken out and the state of peeling was assessed in the following way.

○: No abnormality of the paint film
Δ: Wrinkling and slightly abnormal appearance of the paint film
X: Peeling of the paint film and very abnormal appearance

[Examples of the Production of Coupling Treated White Colored Electrically Conductive Fillers]

Production of Coupling _Treated White Colored Electrically Conductive Filler (1)

The silane coupling agent vinyltriethoxysilane KBE1003 (trade name, produced by the Shinetsu Kagaku Kogyo Co., minimum covering area 410 $m^2$/g) (2.6 parts by mass) was mixed with 250 ml of ethyl alcohol and stirred for about 10 minutes in a TK homogenizer (produced by the Tokushuki Kogyo Co.) and uniformly dispersed. Then 100 parts by mass of the white colored electrically conductive filler FT1000 (Ishihara Sangyo, specific surface area 15 $m^2$/g) were introduced into the dispersion so obtained and the mixture was stirred gently for 1 hour. Subsequently, the filler was filtered off using reduced pressure filtering apparatus and dried in a hot draught for 3 hours at from 50 to 60˚C and then vacuum dried for 5 hours at from 50 to 60˚C and then it was dispersed for 5 minutes at 2000 rpm using a TK homogenizer and the coupling treated white colored electrically conductive filler (1) of this invention was obtained. The silane coupling agent coverage of this white colored electrically conductive filler was 70%.

Production of Coupling Treated White Colored Electrically Conductive Fillers (2) to (5)

Production was carried out in the same way as in Example of Production 1 described above except that the amount of the silane coupling agent vinyltriethoxysilane KBE1003 was changed to 0.4 part by mass, 3.3 parts by mass, 0.2 part by mass or 3.5 parts by mass, and the corresponding coupling treated white colored electrically conductive fillers (2), (3), (4) and (5) were obtained. The silane coupling agent coverages of these white colored electrically conductive fillers were 10%, 90%, 5% and 95%. -

Production of Coupling Treated White Colored Electrically Conductive Filler (6)

Production was carried out in the same way as in Example of Production 1 described above except that the silane coupling agent was changed to 2.4 parts by mass of γ-aminopropyltriethoxysilane KBM903 (trade name, produced by the Shinetsu Kagaku Kogyo Co., minimum covering area 436 $m^2$/g) and the coupling treated white colored electrically conductive filler (6) was obtained. The coupling agent coverage of this white colored electrically conductive filler was 70%.

Production of Coupling Treated White Colored Electrically Conductive Filler (7)

Production was carried out in the same way as in Example of Production 1 described above except that the silane coupling agent was changed to 3.75 parts by mass of γ-glycidoxypropyltriethoxysilane KBM403 (trade name, produced by the Shinetsu Kagaku Kogyo Co., minimum covering area 280 $m^2$/g) and the coupling treated white colored electrically conductive filler (7) was obtained. The coupling agent coverage of this white colored electrically conductive filler was 70%.

Production of Coupling Treated White Colored Electrically Conductive Filler (8)

Production was carried out in the same way as in-Example of Production 1 described above except that the white colored electrically conductive filler was changed to 100 parts by mass of FT3000 (trade name, produced by Ishihara Sangyo, specific surface area 5 $m^2$/g) and the amount of the silane coupling agent vinyltriethoxysilane KBE1003 was changed to 0.9 part by mass, and the coupling treated white colored electrically conductive filler (8) was obtained. The coupling agent coverage of this white colored electrically conductive filler was 70%.

Production of Coupling Treated White Colored Electrically Conductive Filler (9)

Production was carried out in the same way as in Example of Production 1 described above except that the white colored electrically conductive filler was changed to 100 parts by mass of WK600 (trade name, produced by Otsuka Kagaku Co., specific surface area 25 $m^2$/g) and the amount of the silane coupling agent vinyltriethoxysilane KBE1003 was changed to 4.3 parts by mass, and the coupling treated white colored electrically conductive filler (9) was obtained. The coupling agent coverage of this white colored electrically conductive filler was 70%.

[Production of White Colored Electrically Conductive Primer Paint Compositions]

**Example 1**

Chlorinated polypropylene resin solution Hardren CY9122 (trade name, produced by the Toyo Kaseoi Kogyo Co., maleic anhydride modified chlorinated polypropylene resin, chlorine content 22%, weight-average molecular weight 50,000 to 60,000, residue on heating 20%) (500 parts by mass) and 100 parts by mass of the coupling treated white colored electrically conductive filler (1) were introduced into a dispersion vessel and dispersed with glass beads until the particle size fell below 15 μm. On reaching the target particle size the dispersion was stopped and the material was taken out and a white colored electrically conductive primer paint composition was obtained. The compounding proportions of resin raw material and coupling treated white colored electrically conductive filler, calculated as solid fractions, were as shown in Table 1.

**Example 2 to 7**

White colored electrically conductive paint compositions with the compositions shown in Table 1 were obtained in the same way as in Example 1 except that the coupling treated white colored electrically conductive filler was changed to the filler (2), (3), (6), (7), (8) or (9).

**Example 8**

Chlorinated polypropylene resin solution Hardren CY9122 (trade name, produced by the Toyo Kaseoi Kogyo Co., maleic anhydride modified chlorinated polypropylene resin; chlorine content 22%, weight-average-molecular weight 50,000 to 60,000, residue on heating 20%) (400 parts by mass) and 80 parts by mass of the coupling treated white colored electrically conductive filler (1) were introduced into a dispersion vessel and dispersed with glass beads until the particle size fell below 15 μm. Then 26.6 parts by mass of the blocked isocyanate Desmodure BL3157 (produced by the Sumika Bayer Urethane Co., HDI isocyanurate blocked with oxime, NCO content 11.2%, residue on heating 75%) was added little by little to the recovered dispersed base, with stirring, and the mixture was stirred thoroughly and a white colored electrically conductive primer paint composition with the composition shown in Table 1 was obtained.

**Example 9**

The white colored electrically conductive primer paint composition 9 with the composition shown in Table 1 was obtained in the same way as in Example 8 except that the 26.6 parts by mass of blocked isocyanate (20 parts by mass as solid fraction) were replaced with 20 parts by mass of the epoxy resin Epicoat #828 (trade name, produced by the Japan Epoxy Resin Co., bisphenol A type liquid epoxy resin, epoxy equivalent 190, residue on heating 100%).

**Examples 10 and 11**

White colored electrically conductive primer paint compositions with the compositions shown in Table 1 were obtained in the same way as in Example 1 except that the chlorinated polypropylene resin solution was replaced with Superkron 842LM (trade name, produced by the Nippon Seishi Chemical Co., maleic anhydride modified chlorinated polypropylene resin, chlorine content 20%, weight-average molecular weight 50,000 to 60,000, residue on heating 20%) or Superkron 892L (trade name, produced by the Nippon Seishi Chemical Co., maleic anhydride modified chlorinated polypropylene resin, chlorine content 22%, weight-average molecular weight 60,000 to 70,000, residue on heating 20%).

**Comparative Examples 1 and 2**

White colored electrically conductive primer paint compositions with the compositions shown in Table 1 were obtained in the same way as in Example 1 except that the coupling treated white colored electrically conductive filler was replaced with the filler (4) or (5).

**Comparative Example 3**

Dispersion was carried out in the same way as in Example 1 except that the white colored electrically conductive filler FT1000 was used instead of the coupling treated white colored electrically conductive filler (1), 2.6 parts by mass of the silane coupling agent vinyltriethoxysilane KBE1003 were added to the recovered dispersed base and a white colored electrically conductive primer paint composition with the composition shown in Table 1 was obtained on stirring thoroughly.

**Comparative Example 4**

Dispersion was carried out in the same way as in Example 1 except that the white colored electrically conductive filler FT1000 was used instead of the coupling treated white colored electrically conductive filler (1) and a white colored electrically conductive primer paint composition with the composition shown in Table 1 was obtained on stirring thoroughly.

[Paint Film Evaluation]

Three sheets (70 mm x 150 mm x 3 mm) of propylene PX01A produced by the Nippon Polychem Co. were prepared and in each case the surface was wiped with isopropyl alcohol and any contamination or dust adhering to the samples for painting was removed. Then, aluminum tape and masking tape were wound around one of the polypropylene sheets in the way described in the electrical conductivity test method. Then the electrically conductive primer paint composition obtained in one of Examples 1 to 11 or Comparative Examples 1 to 4 of which the viscosity had been adjusted with xylene so that the Ford Cup #4 viscosity at 20°C was 11 seconds was painted onto the sheet with an air sprayer in such a way as to provide a dry paint film thickness of from 6 to 8 μm. The aluminum tape was peeled off the sample immediately after painting and the electrical conductivity after painting was measured. The results were as shown in Table 1.

The other two sheets were painted with an electrically conductive primer paint composition obtained in Example 1 to 11 or Comparative Example 1 to 4 in the same way as above except that the aluminum tape and masking tape were not wound around the sheets and then left to stand for 2 minutes at room temperature. Then, the acrylic resin based base coat paint Primack No. 5600 White Solid (a white colored paint, produced by the Nippon Oil and Fat/BASF Coatings Co.) was painted on by electrostatic painting in such a way as to provide a dry paint film thickness of 15 μm, and then the acrylic resin based clear paint Primack No. 5900 Clear (a white colored paint, produced by the Nippon Oil and Fat/BASF Coatings Co.) was painted on wet-on-wet by electrostatic painting in such a way as to provide a dry paint film thickness of 30 μm, and painted test sheets were obtained by keeping these sheets in a drier at a temperature of 120°C for 20 minutes. Tests of the adhesion with the base material and the moisture resistance were carried out using these test sheets. The results obtained were as shown in Table 1.

## Table 1

| White Colored Electrically Conductive Primer Paint Composition | Example 1 | Example 2 | Example 3 | Example 4 | Example 5 |
|---|---|---|---|---|---|
| Chlorinated polyolefin Type/Parts by mass | A-1 100 | A-1 100 | A-1 100 | A-1 100 | A-1 100 |
| Blocked Isocyanate Type/Parts by mass | | | | | |
| Epoxy Resin | | | | | |

| Type/Parts by mass | | | | | |
|---|---|---|---|---|---|
| Coupling Treated White Colored Electrically Conductive Filler Type/Parts by mass/ Coverage | (1) 100 70% | (2) 80 10% | (3) 80 90% | (6) 80 70% | (7) 80 70% |
| White Colored Electrically Conductive Filler Type/Parts by mass/ Coverage | | | | | |
| Silane Coupling Agent Type/Parts by mass | | | | | |
| Results of Assessment | | | | | |
| Electrical Conductivity | O | O | Δ | O | O |
| Adhesion | O | O | O | O | O |
| Appearance after Moisture Resistance Test | O | Δ | O | O | O |
| Adhesion after Moisture Resistance Test | O | O– | O | O | O |

## Table 1 (Continued)

| White Colored Electrically Conductive Primer Paint Composition | Example 6 | Example 7 | Example 8 | Example 9 | Example 10 |
|---|---|---|---|---|---|
| Chlorinated polyolefin Type/Parts by mass | A-1 100 | A-1 100 | A-1 80 | A-1 80 | A-2 100 |
| Blocked Isocyanate Type/Parts by mass | | — | B-1 20 | — | |
| Epoxy Resin Type/Parts by mass | | | | C-1 20 | |
| Coupling Treated White Colored Electrically Conductive Filler Type/Parts by mass/ Coverage | (8) 80 70% | (9) 80 70% | (1) 80 70% | (1) 80 70% | (1) 80 70% |
| White Colored Electrically Conductive Filler Type/Parts by mass/ Coverage | | | | | |
| Silane Coupling Agent Type/Parts by mass | | | | | |
| Results of Assessment | | | | | |
| Electrical Conductivity | O | O | O | O | O |
| Adhesion | O | O | O | O | O |
| Appearance after Moisture Resistance Test | O | O | O | O | O |
| Adhesion after | O | O | O | O | O |

| Moisture Resistance Test | | | | . | |
|---|---|---|---|---|---|

## Table 1 (Continued)

| White Colored Electrically Conductive Primer Paint Composition | Example 11 | Comp. Ex. 1 | Comp. Ex. 2 | Comp. Ex. 3 | Comp. Ex. 4 |
|---|---|---|---|---|---|
| Chlorinated polyolefin Type/Parts by mass | A-3 100 | A-1 100 | A-1 100 | A-1 100 | A-1 100 |
| Blocked Isocyanate Type/Parts by mass | | | | | |
| Epoxy Resin Type/Parts by mass | | | | | |
| Coupling Treated White Colored Electrically Conductive Filler Type/Parts by mass/ Coverage | (1) 80 70% | (4) 80 5% | (5) 80 95% | | |
| White Colored Electrically Conductive Filler Type/Parts by mass/ Coverage | | | | D-1 80 | D-1 80 |
| Silane Coupling Agent Type/Parts by mass | | | | E-1 2.6 | |
| Results of Assessment | | | | | |
| Electrical Conductivity | O | O | X | O | O |
| Adhesion | O | O | O | O | O |
| Appearance after | O | X | O | X | X |

| | | | | | |
|---|---|---|---|---|---|
| Moisture Resistance Test | | - | | ' | |
| Adhesion after Moisture Resistance Test | O | Δ | O | Δ | X |

The raw materials represented by the abbreviations in Table 1 were as follows:

A-1: Hardren CY9122 (trade name, produced by the Toyo Kasei Kogyo Co., maleic anhydride modified chlorinated polypropylene resin, chlorine content 22%, weight-average molecular weight 50,000 to 60,000, residue on heating 20%)

A-2: Superkron 842LM (trade name, produced by Nippon Seishi Chemical Co., maleic anhydride modified chlorinated polypropylene resin, chlorine content 20%, weight-average molecular weight 50,000 to 60,000, residue on heating 20%)

A-3: Superkron 892L (trade name, produced by Nippon Seishi Chemical Co., maleic anhydride modified chlorinated polypropylene resin, chlorine content 22%, weight average molecular weight 60,000 to 70,000, residue on heating 20%)

B-1: Desmodure BL3175 (trade name, produced by the Sumika Bayer Urethane Co., HDI isocyanurate blocked -with oxime, NCO content 11.2%, residue on heating 75%) C-1: Epicoat #828 (trade name, produced by the Japan Epoxy Resin Co., a bisphenol A type epoxy resin. Epoxy equivalent 190, residue on heating 100%) D-1: White colored electrically conductive filler FT1000 (trade name, produced by the Ishihara Sangyo Co., needle-like shape, rutile type crystalline form, specific surface area 15 $m^2$/g)

E-1: Silane coupling agent vinyltriethoxysilane KBE1003 (trade name, produced by the Shinetsu Kagaku Kogyo Co., minimum covered area 410 $m^2$/g)

[Brief Explanation of the Drawing]

Figure 1 is a drawing which illustrates the method of measuring the electrical conductivity of an electrically conductive primer paint film on a base material.

Key to the Drawing

1       Polyolefin base material
4       Electrically conductive primer paint film
5       Electrical conductivity measuring device
20,21    Aluminum tapes
30,31    Masking tapes
50,51    Terminals

**Claims**

**1.** A white colored electrically conductive primer paint composition comprising (A) resin which includes chlorinated polyolefin resin, (B) white colored electrically conductive filler which has been surface treated with a coupling agent and of which the coupling agent surface coverage is from 10 to 90% and (C) solvent in which there are from 10 to 150 parts by mass of (B) per 100 parts by mass as solid fraction of the resin (A).

**2.** The white colored electrically conductive primer paint composition disclosed in claim 1 in which the white colored electrically conductive filler which has been surface treated with a coupling agent is either fibrous gallium titanate or titanium oxide which has been coated with tin oxide and/or antimony and which has been treated with at least one type of coupling agent selected from among the silane coupling agents, titanium coupling agents, aluminum coupling agents and zircoaluminum coupling agents.

3. The white colored electrically conductive primer paint composition disclosed in claim 1 in which the chlorine content is from 5 to 50 mass% and the weight-average molecular weight of the chlorinated polyolefin is from 10,000 to 100,000.

4. A method of painting in which painting on a polyolefin base material is carried out using the white colored electrically conductive primer paint disclosed in any of claims 1 to 3.

5. An object where painting has been carried out on a polyolefin base material with the method of painting disclosed in claim 4.

**Patentansprüche**

1. Weiß gefärbte elektrisch leitfähige Grundierlackzusammensetzung, umfassend (A) Harz, das chloriertes Polyolefinharz enthält, (B) weiß gefärbten elektrisch leitfähigen Füllstoff, der mit einem Kupplungsmittel oberflächenbehandelt worden ist und dessen Oberflächenbelegung mit dem Kupplungsmittel 10 bis 90% beträgt, und (C) Lösungsmittel, in dem 10 bis 150 Masseteile (B) pro 100 Masseteile als Feststofffraktion des Harzes (A) vorliegen.

2. Weiß gefärbte elektrisch leitfähige Grundierlackzusammensetzung nach Anspruch 1, wobei der weiß gefärbte elektrisch leitfähige Füllstoff, der mit einem Kupplungsmittel oberflächenbehandelt worden ist, entweder faserartiges Galliumtitanat oder Titanoxid, das mit Zinnoxid und/oder Antimon beschichtet worden ist und mit mindestens einem Typ von Kupplungsmittel, das unter Silan-Kupplungsmitteln, Titan-Kupplungsmitteln, Aluminium-Kupplungsmitteln und Zircoaluminium-Kupplungsmitteln ausgewählt ist, behandelt worden ist.

3. Weiß gefärbte elektrisch leitfähige Grundierlackzusammensetzung nach Anspruch 1, wobei der Chlorgehalt 5 bis 50 Masse-% beträgt und das gewichtsmittlere Molekulargewicht des chlorierten Polyolefins 10.000 bis 100.000 beträgt.

4. Lackierverfahren, bei dem man ein Polyolefin-Basismaterial mit dem weiß gefärbten elektrisch leitfähigen Grundierlack nach einem der Ansprüche 1 bis 3 lackiert.

5. Gegenstand, bei dem ein Polyolefin-Basismaterial mit dem Lackierverfahren nach Anspruch 4 lackiert worden ist.

**Revendications**

1. Composition de peinture primaire de couleur blanche électriquement conductrice comprenant (A) une résine qui comprend une résine de polyoléfine chlorée, (B) une charge de couleur blanche électriquement conductrice qui a été traitée en surface avec un agent de couplage et dont le recouvrement de surface par l'agent de couplage est de 10 à 90 %, et (C) un solvant, dans laquelle il y a de 10 à 150 parties en masse de (B) pour 100 parties en masse de fraction solide de la résine (A).

2. Composition de peinture primaire de couleur blanche électriquement conductrice selon la revendication 1 dans laquelle la charge de couleur blanche électriquement conductrice qui a été traitée en surface avec un agent de couplage est du titanate de gallium fibreux ou de l'oxyde de titane qui a été recouvert d'oxyde d'étain et/ou d'antimoine et qui a été traité avec au moins un type d'agent de couplage choisi parmi les agents de couplage à base de silane, les agents de couplage à base de titane, les agents de couplage à base d'aluminium et les agents de couplage à base de zirconium-aluminium.

3. Composition de peinture primaire de couleur blanche électriquement conductrice selon la revendication 1 dans laquelle la teneur en chlore est de 5 à 50 % en masse et le poids moléculaire moyen en poids de la polyoléfine chlorée est de 10 000 à 100 000.

4. Procédé de peinture dans lequel un matériau de base polyoléfinique est peint en utilisant la peinture primaire de couleur blanche électriquement conductrice selon l'une quelconque des revendications 1 à 3.

5. Objet comprenant un matériau de base polyoléfinique qui a été peint par le procédé de peinture selon la revendication 4.

Figure 1

(A)    (B)    (C)    (D)

Electrical Conductivity
Measuring Apparatus

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004262988 A
- WO 2004217872 A
- WO 2003039010 A
- WO 2005012449 A1
- JP 2005171024 A
- US 5804616 A
- JP 2194071 A
- JP 62131064 A
- JP H5303238 B